# EUROPÄISCHE PATENTANMELDUNG

(11) **EP 4 273 957 A1**
(43) Veröffentlichungstag der Anmeldung: **08.11.2023**
(21) Anmeldenummer: 22172002.2
(22) Anmeldetag: 06.05.2022
(51) Int. Cl.: H01M 4/139, H01M 10/04, G01N 21/31, G01N 21/84, G01N 21/88, H01M 10/052

(54) **BESTIMMUNG VON INHOMOGENITÄTEN BEI DER ELEKTRODENFERTIGUNG FÜR BATTERIEZELLEN**

(71) Anmelder: Siemens Aktiengesellschaft, 80333 München (DE)
(72) Erfinder: Gigler, Alexander Michael, 86836 Untermeitingen (DE); Schulte, Sascha, 91315 Höchstadt (DE); Baldauf, Manfred, 91056 Erlangen (DE); Otte, Clemens, 81739 München (DE); Pohle, Roland, 85570 Herdweg (DE); Kornely, Susanne, 82178 Puchheim (DE); Witt, Jonas, 96050 Bamberg (DE)
(74) Vertreter: Siemens Patent Attorneys

(57) **Zusammenfassung**

Die Erfindung gibt eine Vorrichtung zur hyperspektralen Bildgebung an Elektrodenbahnen (26, 1) bei der Elektrodenfertigung für Batteriezellen an. Die Vorrichtung weist auf: Mindestens eine hyperspektrale Spektroskopie-Einheit (27) aufweisend eine Zeilenkamera (21) zur Bildgebung, wobei die Spektroskopie-Einheit (27) angeordnet und eingerichtet ist,
- an einem vorgegebenen Ort der Elektrodenfertigung von der sich vorwärts bewegenden Elektrodenbahn (26, 1) hyperspektrale Bilder aufzunehmen,
- aus den Bildern Inhomogenitäten der Elektrodenbahn (26, 1) zu ermitteln und
- deren örtliche Position in Längsrichtung der Elektrodenbahn (26, 1)25) zu ermitteln und zu sichern.

Die Erfindung gibt auch ein zugehöriges Verfahren an.

## Beschreibung

### GEBIET DER ERFINDUNG

Die Erfindung betrifft eine Vorrichtung und ein Verfahren zur hyperspektralen Bildgebung an Elektrodenbanen bei der Elektrodenfertigung für Batteriezellen.

### HINTERGRUND DER ERFINDUNG

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt.

Eine Lithium-Ionen-Batterie umfasst typischerweise mehrere Batteriezellen. Eine Batteriezelle, insbesondere eine Lithium-Ionen-Batteriezelle, umfasst eine Vielzahl von Schichten. Typischerweise umfassen diese Schichten Anoden, Kathoden, Separatoren und weitere Elemente. Diese Schichten können als Stapel oder als Wicklungen ausgestaltet sein.

Die Elektroden umfassen üblicherweise Metallfolien, insbesondere umfassend Kupfer und/oder Aluminium, welche mit einem Aktivmaterial beschichtet werden. Als Aktivmaterial wird dabei typischerweise eine lithiumhaltige Paste, Slurry genannt, aufgetragen. Die Folien und die Beschichtung weisen jeweils eine Dicke von einigen Mikrometern auf. Dadurch haben bereits einige Mikrometer Abweichung der Dicke der Beschichtung oder bei der Materialeigenschaft, insbesondere der Materialzusammensetzung, negative Auswirkungen auf die Qualität der Elektrode. Nachteilig werden bei unregelmäßiger Beschichtung somit qualitativ minderwertige Batteriezellen hergestellt. Weiterhin ist ein sicheres Betreiben der Batteriezelle nachteilig nicht sichergestellt.

Derzeit können im Stand der Technik fehlerhafte Beschichtungen häufig erst nach Abschluss des gesamten Produktionsprozesses der Batteriezelle im Rahmen eines sogenannten End-ofline-Tests durchgeführt werden. Teilweise werden fehlerhafte Beschichtungen auch erst nach mehreren Jahren der Batteriezelle im Betrieb festgestellt.

Batteriematerialien für die Batteriezellenfertigung werden in der Herstellung als zähflüssiges Medium (eine Beschichtungspaste, Englisch: Slurry) auf die Elektrodenbahn abgeschieden oder aufgetragen.

Die kontinuierliche Bestimmung von Materialparametern (z.B. Zusammensetzung, Homogenität der Verteilung einer Zutat, Feuchte ...) entlang einer (endlos langen) Fertigungsstrecke / Produktbahn (z.B. Batterie-Elektroden, Papierbahn, Stahl, ...) bzw. einer Serienfertigungsanlage (z.B. Kekse, Brezeln, Bremsbeläge, ...) ist von kritischer Bedeutung für das Ergebnis.

Speziell die Batteriezellfertigung (hier bezogen auf Li-Ionen-Zellen) ist heute sehr häufig von explorativem Vorgehen geprägt (d.h. eher eine Mischung aus Handwerk und Kunst statt Wissenschaft bzw. komplett verstandener industrieller Prozess). Das pastöse aktive Material wird dabei auf eine lange Elektrodenbahn (typischerweise sequentiell) auf beiden Seiten aufgebracht, getrocknet und verarbeitet. Dabei sind v.a. Prozessparameter häufig als Kochrezepte (z.B. Trocknung für x Stunden bei y Grad) hinterlegt und werden kaum mittels Sensoren überwacht.

Da für die pastöse Mischung, dem sog. Slurry, aus NMC oder Grafit (als Hauptbestandteile) mit einem Lösemittel und ggf. weiteren Komponenten (z.B. Leitruß), der auf die Elektrodenbahn aufgebracht wird, die Zutaten in einem Mischer vermengt und hierbei die Homogenität der Mischung und die Viskosität entscheidend für die Performance der späteren Batteriezelle, und somit der gesamten späteren Batterie, ist, muss diese Homogenität der Beschichtung im Herstellungsprozess unbedingt überwacht werden.

Bei einer suboptimal homogenisierten Mischung werden dabei Bereiche auftreten, die beim Beschichten mit mehr oder weniger Lösungsmittel (Wasser, NMP) entstehen. Andererseits, entstehen dadurch auch Bereiche unterschiedlicher chemischer Zusammensetzung. Weiterhin kann es zu einer ungleichmäßigen De-Agglomeration der Feststoffpartikel kommen, d.h. zu einer Abweichung der Partikelgröße bzw. Partikelgrößenverteilung vom Sollwert, falls der Mischprozess Schwankungen unterliegt. Hierdurch wird ein closed-loop-feedback zwischen der Erkennung der Inhomogenität und dem Slurry-Mixer ermöglicht.

In der weiteren Verarbeitung können diese Bereiche dann zu ungleichmäßigem Verhalten der hergestellten Elektroden führen und/oder Kurzschlüsse und Ineffizienz in den Batteriezellen verursachen.

Bisher werden als Stichproben extraktiv Stellen aus der produzierten Bahn gestanzt bzw. ganze Abschnitte aus der Produktion entnommen. Das so entnommene Material wird danach im besten Falle mikroskopisch analysiert. Abweichungen der chemischen Zusammensetzung der Schichten oder der Partikelgrößenverteilung können offline (in Laboruntersuchungen) durch Röntgenmethoden nachgewiesen werden.

### ZUSAMMENFASSUNG DER ERFINDUNG

Es ist Aufgabe der Erfindung, eine Lösung anzugeben, welche die Elektrodenfertigung für Batteriezellen verbessert.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung betrifft die Bestimmung der örtlichen Position von Inhomogenitäten in Elektrodenbahnen bei der Herstellung der beschichteten Elektroden für die Batteriefertigung.

Die Erfindung beansprucht eine Vorrichtung zur hyperspektralen Bildgebung an Elektrodenbanen bei der Elektrodenfertigung für Batteriezellen. Die Vorrichtung weist auf:
Mindestens eine hyperspektrale Spektroskopie-Einheit aufweisend eine Zeilenkamera zur Bildgebung, wobei die Spektroskopie-Einheit angeordnet und eingerichtet ist,
- an einem vorgegebenen Ort der Elektrodenfertigung von der sich vorwärts bewegenden Elektrodenbahn hyperspektrale Bilder aufzunehmen,
- aus den Bildern Inhomogenitäten der Elektrodenbahn zu ermitteln und
- deren örtliche Position (d.h. eine Ortskodierung) in Längsrichtung der Elektrodenbahn zu ermitteln und zu sichern.

Die Elektrodenbahn ist eine mit dem Slurry beschichtete Trägerfolie. Die Zeilenkamerawird im Englischen als "Push-Broom-Scanner" bezeichnet. "Sichern" wird weit gefasst, auch im Sinne von "speichern" oder "markieren".

In einer Weiterbildung weist die Vorrichtung eine Umlenkrolle auf, über die die Elektrodenbahn geführt wird, wobei an der Position der Kontaktfläche zwischen der Umlenkrolle und der Elektrodenbahn die Zeilenkamera die Bilder aufnimmt.

In einer Weiterbildung ist die Vorrichtung ausgebildet, das Sichern der örtlichen Position der Inhomogenität durch Markieren auf der Elektrodenbahn auszuführen. Die Markierungen können beispielsweise beim Schneiden der Elektrodenbahn wieder gefunden werden und zum Sortieren verwendet.

In einer Weiterbildung weist die Vorrichtung eine Graviereinheit auf, die eingerichtet ist, das Markieren durch eine Gravur vorzugsweise am Längsrand der Elektrodenbahn auszuführen. Dies kann zum Beispiel durch eine Lasergraviermaschine erfolgen.

In einer Weiterbildung weist die Vorrichtung eine Speichereinheit auf, die eingerichtet ist, spektrale Charakteristika der Inhomogenität als Ortskodierung entlang der Elektrodenbahn derart zu sichern, dass die Position der Inhomogenität anhand der spektralen Charakteristika auffindbar ist. Die gespeicherten Spektren der Inhomogenitäten können beispielsweise beim Schneiden der Elektrodenbahn wieder gefunden werden.

In einer Weiterbildung weist die Vorrichtung ein Fertigungsleitsystem auf, mit dem die Spektroskopie-Einheit verbunden ist und das eingerichtet ist, die Spektroskopie-Einheit zur Messung zu triggern. Dies erlaubt eine spätere lokale Zuordnung der Messung, beispielsweise beim Schneiden und Sortieren von Elektrodenbahnen.

In einer Weiterbildung weist die Vorrichtung eine Auswerte- und Recheneinheit am Ort der Spektroskopie-Einheit auf, wobei die Auswerte- und Recheneinheit eingerichtet ist, Daten der spektroskopischen Bildgebung in einem Vektor vorzuverdichten und der örtlichen Position zuzuordnen. Dadurch wird ein Maß für die laterale Verteilung von Materialien entlang einer betrachteten Messlinie ermittelt. D.h. ein Vektor der Inhomogenität wird erstellt.

In einer Weiterbildung ist die Zeilenkamera eine SWIR-Zeilenkamera. Damit ist eine kostengünstige Lösung möglich.

In einer Weiterbildung weist die Vorrichtung in der Spektroskopie-Einheit eine KI - Engine auf, die eingerichtet ist, computergestützt die Inhomogenitäten zu ermitteln.

In einer Weiterbildung weist wird die KI - Engine mittels Deep-Learning-Methoden trainiert, um aus den Spektren die Inhomogenitäten zu ermitteln.

Die Erfindung beansprucht auch ein Verfahren zur Ermittlung von Inhomogenitäten mittels hyperspektraler Bildgebung an Elektrodenbahnen bei der Elektrodenfertigung für Batteriezellen, mit folgenden Schritten:
- Aufnehmen von hyperspektralen Bildern an einem vorgegebenen Ort der Elektrodenfertigung von der sich vorwärts bewegenden Elektrodenbahn,
- Ermittlung von Inhomogenitäten der Elektrodenbahn aus den Spektren der Bilder und
- Ermittlung und Sicherung der örtlichen Position der Inhomogenitäten in Längsrichtung der Elektrodenbahn.

In einer Weiterbildung des Verfahrens werden an der Position der Kontaktfläche zwischen einer Umlenkrolle, über die die Elektrodenbahn geführt wird, und der Elektrodenbahn durch die Zeilenkamera die Bilder aufgenommen.

In einer Weiterbildung des Verfahrens erfolgt das Sichern der örtlichen Position der Inhomogenität durch ein Markieren auf der Elektrodenbahn.

In einer Weiterbildung des Verfahrens werden die spektralen Charakteristika der Inhomogenität als Ortskodierung entlang der Elektrodenbahn derart gespeichert, dass die Position der Inhomogenität anhand der spektralen Charakteristika auffindbar ist.

In einer Weiterbildung des Verfahrens werden mittels einer KI - Engine computergestützt die Inhomogenitäten ermittelt.

Die Erfindung bietet u.a. folgende Vorteile:
- Messung an einer Umlenkrolle bzw. über einem unterstützenden /stabilisierenden Bahnsegment,
- Direkte Online-Bewertung erlaubt ein Closed-Loop-Feedback mit z.B. dem vorgeschalteten Trockner,
- Feld-nahe Vorverdichtung der Daten reduziert die Last auf der IT und befähigt durch die damit einhergehende semantische Annotation eine physikalisch "richtige" Bewertung (im Sinne einer realen Messgröße statt "Hausnummer"),
- Schaffung der semantischen Annotation,
- Integration in die Fertigungsautomatisierung,
- Zuordnung zu einer Position entlang dem "Produkt",
- Rückverfolgbarkeit,
- Kontinuierliche Messinformation,
- Zerstörungsfrei ohne Probennahme und
- eine kontinuierliche Erfassung im Prozess, die eine charakteristische 2D Inhomogenitätsindikation liefert, welche sich zur Identifikation/ einem Wiedererkennen von Bahnsegmenten an nachfolgenden Prozessschritten eignet.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: die Beschichtung der Trägerfolie,
- FIG. 2: die Trocknung der beschichteten Trägerfolie,
- FIG. 3: das Kalandern der getrockneten Trägerfolie
- FIG. 4: ein Blockschaltbild der hyperspektralen Messanordnung und
- FIG. 5: ein Ausschnitt eines Hyperspektralbildes einer Elektrodenbahn.

### DETAILLIERTE BESCHREIBUNG DER ERFINDUNG

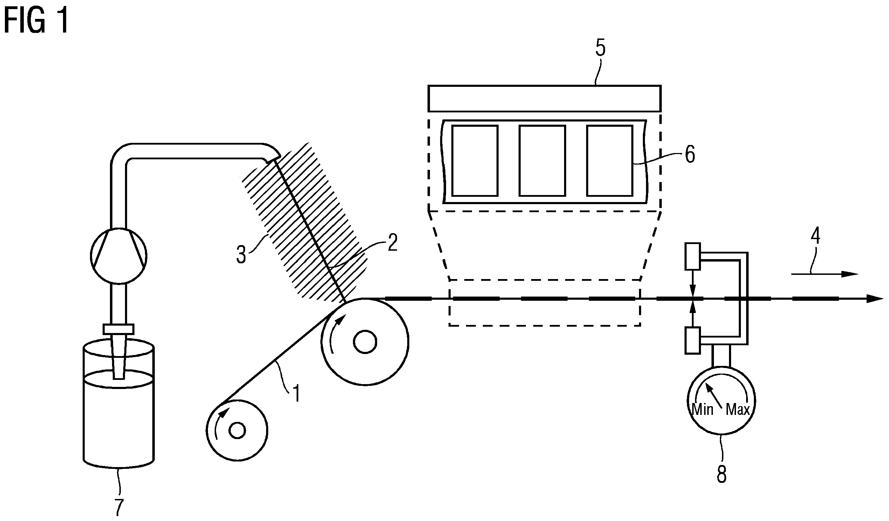

FIG. 1 bis FIG. 3 zeigen schematisch und beispielhaft eine Elektrodenfertigung für Batterien. Als erstes wird eine Trägerfolie 1 mit dem Slurry 2, das aus einem Speicher 7 gefördert wird, über ein Auftragswerkzeug 3, z.B. eine Schlitzdüse, eine Rakel oder eine Rasterwalze, beschichtet (FIG. 1). Die Trägerfolie 1 wird in Beschichtungsrichtung 4 entweder kontinuierlich oder intermittierend (intermittierende Beschichtung 6 in der Draufsicht 5) beschichtet.

Die Foliendicken (Anode - Kupferfolie und Kathode - Aluminiumfolie) schwanken je nach Batteriezellendesign zwischen 10 µm und 25 µm. Die Trägerfolie 1 wird auf einer Breite von bis zu 900 mm in einem Rolle-zu-Rolle-Prozess beschichtet. Die Beschichtung der Folienober- und Folienunterseite erfolgt je nach Ausgestaltung der Fertigungsanlage entweder sequenziell oder gleichzeitig. Die Dicke der Beschichtung 6 mit dem Slurry 2 wird in noch feuchtem Zustand mit einer Nassdickenmessung 8 ermittelt.

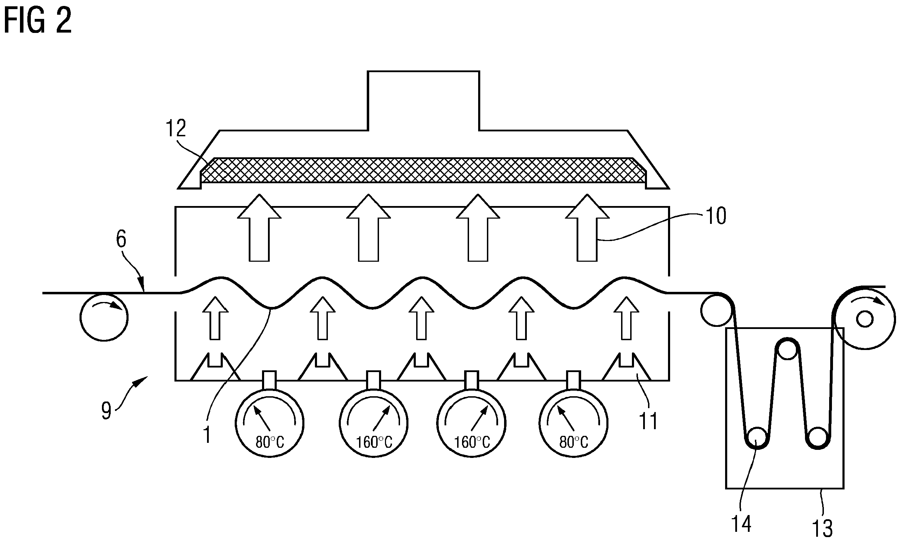

Nach dem Beschichten (FIG. 1) wird die beschichtete Trägerfolie 1 (auch als Elektrodenbahn bezeichenbar) direkt in einen Trockner 9 (FIG. 2) geführt. Bei einer simultanen, doppelseitigen Beschichtung wird ein Schwebebahntrockner verwendet. Das Lösungsmittel (Dämpfe 10 über Abzug 12) wird der Beschichtung 6 durch Wärmezufuhr über Luftdüsen 11 entzogen und wieder zurückgewonnen oder der thermischen Verwertung zugeführt.

Die Trocknerlänge ist entscheidend für die realisierbare Durchlaufgeschwindigkeit. Der Trockner 9 ist zur Umsetzung eines individuellen Temperaturprofils in verschieden Temperaturzonen unterteilt. Nach dem Trocknerdurchlauf wird die getrocknete Elektrodenbahn (= beschichtete Trägerfolie 1) auf Raumtemperatur mit einer Kühleinrichtung 13 mit Hilfe von Kühlwalzen 14 abgekühlt.

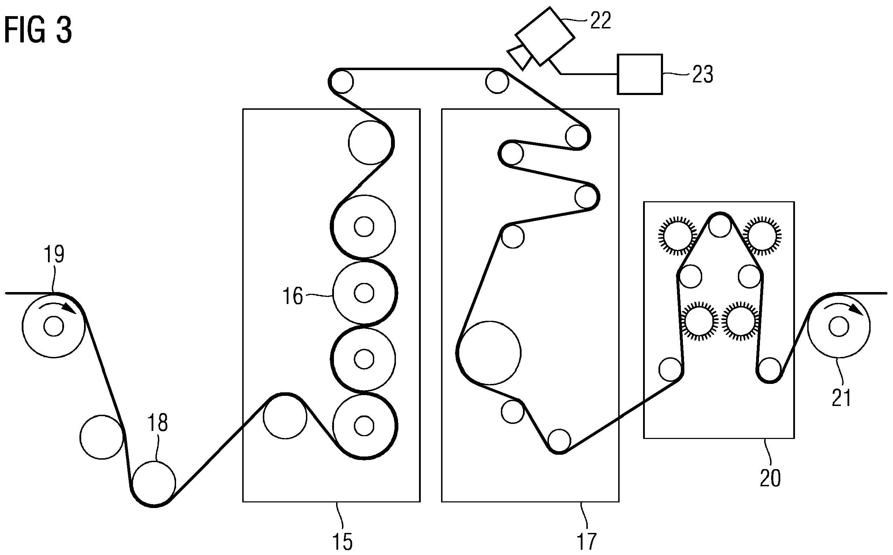

Bei dem anschließenden Kalandern 15 (FIG. 3) wird die beidseitig beschichtete Trägerfolie 1 durch ein oder mehrere rotierende Walzenpaare 16 verdichtet. Die Verdichtung der Folie erfolgt durch Ober- und Unterwalzen. Das Walzenpaar 16 erzeugt einen exakt einstellbaren Liniendruck. Der Liniendruck bestimmt die Porosität der Elektrodenbahn. Ein zu stark eingestellter Liniendruck erzeugt einen Quetschvorgang und beschädigt die Elektrodenbahn. Die Sauberkeit des Walzenpaars 16 ist für die Vermeidung des Eindringens von Fremdpartikeln in das Substratmaterial entscheidend.

Der Transport der Trägerfolie 1 durch den Kalander 15 erfolgt mit Hilfe eines Zugwerks 17. Der Einzug 18 sorgt für einen sauberen Einlauf von einer Speicherrolle 19 in den Kalander 15. Nach dem Kalandern wird die Elektrodenbahn in einem Reinigungswerk 20 gereinigt und als "Mutterspule 21" für eine Weiterverarbeitung zu Batteriezellen, wie zum Beispiel Schneiden, gelagert.

Vorteilhaft erfolgt eine hyperspektrale Messung nach der Trocknung (FIG. 2) oder nach dem Kalandern (FIG. 3) mit einer Zeilenkamera 22 und einer nachgeschalteten Auswerte- und Recheneinheit 23.

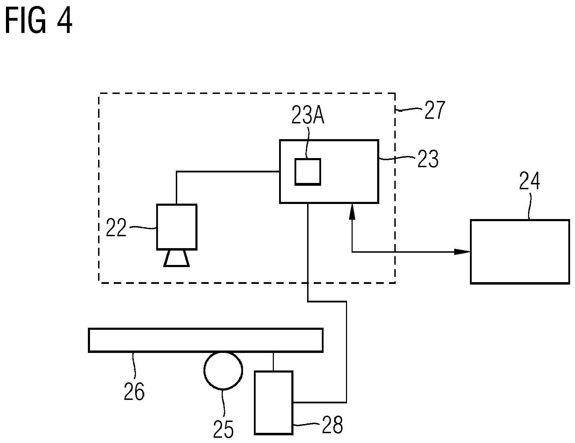

FIG. 4 zeigt das Blockschaltbild einer hyperspektralen Messanordnung aufweisend eine Spektroskopie-Einheit 27 mit einer Zeilenkamera 22, welche die hyperspektralen Bilder der beschichteten Trägerfolie (= Elektrodenbahn 26) am Ort einer Umlenkrolle 25 aufnimmt. Die Zeilenkamera 22 ist mit der Auswerte- und Recheneinheit 23 verbunden, die wiederum mit einem Fertigungsleitsystem 24 der Elektrodenbahnfertigung verbunden ist. Zur Markierung der Elektrodenbahn 26 beispielsweise an festgestellten Inhomogenitäten ist eine Graviereinheit 28 vorgesehen.

Die hyperspektrale Bildgebung in der Variante der Zeilenkamera 22 (= Push-Broom-Scanners: Linienmessung von Spektren mit hoher lateraler d.h. räumlicher Auflösung) wird wie in FIG. 4 dargestellt vorzugsweise an der Umlenkrolle 25 eingesetzt, um
a) eine ruhende Elektrodenbahnposition zu betrachten,
b) eine Synchronisation mit der Relativbewegung der Elektrodenbahn zu erhalten,
c) eine Rückverfolgbarkeit der Position zu ermöglichen und
d) eine stabile Messsituation zu schaffen (robust gegen Vibration, verdunkelbar, etc.)

Im SWIR (850-1700nm) zeigen sich bei der Bildgebung (u.a. auch preisgünstig) Signaturen, die sich mit dem Grad der Homogenität der Verteilung der Ausgangsmaterialien verändert. Im NIR (1200-2500nm) sind noch spezifischere Banden möglich, aber der Preis der spektralen Geräte ist hoch. Unter wirtschaftlichen Gesichtspunkten ist die Verwendung des SWIR daher vorteilhaft.

Das spektrale Messsystem ist dabei vorteilhaft an das Fertigungsleitsystem 24 (PLC, Edge, etc.,) angebunden und erhält von hier Trigger zur Messung, welche eine spätere lokale Zuordnung der Messung erleichtert.

Vorteilhaft ist hierbei die frühe Verarbeitung der Daten im Feld, nahe der Messstelle. Hierdurch sinkt die Last auf dem IT-System, da hohe Datenraten auf Grund der hohen Produktgeschwindigkeit auftreten und selbst moderne Hochgeschwindigkeitsnetze blockieren würden.

Bereits direkt nach der Messung wird daher der Datensatz vorverdichtet und ein Maß für die laterale Verteilung der Materialien entlang der betrachteten Messlinie, d.h. ein Vektor der Inhomogenität, der Bahnposition zugeordnet. Diese Information ist bereits um zwei bis drei Größenordnungen geringer als die Rohdaten der eigentlichen Messung. (ein HSI Frame: 640 x 224 pixel vs. ein Auswerteergebnis: 640 x 1 Vektor oder nur ein skalarer Indikator)

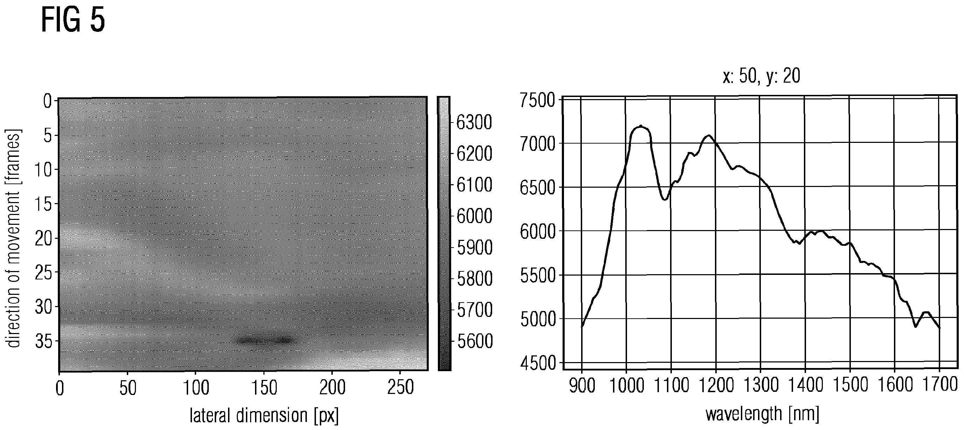

FIG. 5 zeigt einen Messpunkt eines Ausführungsbeispiel. Im linken Bild ist ein Ausschnitt eines Hyperspektralbildes einer Elektrodenbahn dargestellt. Inhomogenitäten sind hier durch unterschiedliche Grautöne repräsentiert. Das rechte Diagramm zeigt die spektrale Auswertung des Pixels mit der Koordinate 50/20. Zu jeder Ortskoordinate x, y des linken Bildes existiert ein Spektrum, das die chemischen Eigenschaften dieses Bildpunktes (=Pixel) beschreibt.

Die gemessenen Spektren können vorzugsweise auf zwei Arten analysiert werden:
A) Überwachtes maschinelles Lernen: Kalibration eines Modells, das die Spektren entweder auf einen Zielwert (z.B. Gehalt an Grafit) abbildet oder klassifiziert (z.B. OK, Not-OK). Hierzu existieren Methoden wie Partial Least Squares, Hauptkomponentenregression, Gauß Prozesse, oder Neuronale Netze.
B) Unüberwachtes maschinelles Lernen: Erkennung von Anomalien, z.B. lokalen Inhomogenitäten in der Beschichtung der Elektrodenbahn (z.B. kann die Varianz der Slurry Deposition an den Außenkanten zunehmen, Schichtdickenveränderungen). Hierzu können statistische Merkmale berechnet werden, wie z.B. die lokale Varianz bzw. Entropie. Alternativ können Residuen Modelle (z.B. Low-rank PCA approximation, Variational Auto-encoder neural networks) erstellt werden.

In beiden Fällen können die Analysen durch Vorverarbeitungsschritte ergänzt werden, beispielsweise indem der Beschichtungsvordergrund von der Substratfolie freigestellt wird, Sensorinformation nach ihrem Grad der Varianzaufklärung herausgefiltert oder der Kontrast erhöht wird.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Trägerfolie
- 2: Slurry
- 3: Auftragswerkzeug
- 4: Beschichtungsrichtung
- 5: Draufsicht
- 6: intermittierende Beschichtung
- 7: Speicher für Slurry 2
- 8: Nassdickenmessung
- 9: Trockner
- 10: Dämpfe
- 11: Luftdüse
- 12: Abzug
- 13: Kühleinrichtung
- 14: Kühlwalzen
- 15: Kalander
- 16: Walzenpaar
- 17: Zugwerk
- 18: Einzug
- 19: Speicherrolle
- 20: Reinigungswerk
- 21: Mutterspule
- 22: Zeilenkamera
- 23: Auswerte- und Recheneinheit
- 23.1: Speichereinheit
- 24: Fertigungsleitsystem
- 25: Umlenkrolle
- 26: Elektrodenbahn
- 27: Spektroskopie-Einheit
- 28: Graviereinheit

## Patentansprüche

1. Eine Vorrichtung zur hyperspektralen Bildgebung an Elektrodenbahnen (26, 1) bei der Elektrodenfertigung für Batteriezellen,
**gekennzeichnet durch**:
Mindestens eine hyperspektrale Spektroskopie-Einheit (27) aufweisend eine Zeilenkamera (21) zur Bildgebung, wobei die Spektroskopie-Einheit (27) angeordnet und eingerichtet ist,
- an einem vorgegebenen Ort der Elektrodenfertigung von der sich vorwärts bewegenden Elektrodenbahn (26, 1) hyperspektrale Bilder aufzunehmen,
- aus den Bildern Inhomogenitäten der Elektrodenbahn (26, 1) zu ermitteln und
- deren örtliche Position in Längsrichtung der Elektrodenbahn (26, 1)25) zu ermitteln und zu sichern.

2. Die Vorrichtung nach Anspruch 1, **gekennzeichnet durch**:
- eine Umlenkrolle (25), über die die Elektrodenbahn (26, 1) geführt wird, wobei an der Position der Kontaktfläche zwischen der Umlenkrolle (25) und der Elektrodenbahn die Zeilenkamera (21) die Bilder aufnimmt.

3. Die Vorrichtung nach Anspruch 1 oder 2,
wobei das Sichern der örtlichen Position der Inhomogenität durch Markieren auf der Elektrodenbahn (26, 1) erfolgt.

4. Die Vorrichtung nach Anspruch 1 oder 2,
**gekennzeichnet durch** eine Graviereinheit (28), die eingerichtet ist, das Markieren **durch** eine Gravur am Längsrand der Elektrodenbahn (26, 1) auszuführen.

5. Die Vorrichtung nach einem der vorhergehenden Ansprüche, **gekennzeichnet durch** eine Speichereinheit (23.1), die eingerichtet ist, spektrale Charakteristika der Inhomogenität als Ortskodierung entlang der Elektrodenbahn (25, 1) derart zu speichern, dass die Position der Inhomogenität anhand der spektralen Charakteristika auffindbar ist.

6. Die Vorrichtung nach einem der vorhergehenden Ansprüche, **gekennzeichnet durch**:
- ein Fertigungsleitsystem (24), mit dem die Spektroskopie-Einheit (27) verbunden ist und das eingerichtet ist, die Spektroskopie-Einheit (27) zur Messung zu triggern.

7. Die Vorrichtung nach einem der vorhergehenden Ansprüche, **gekennzeichnet durch**:
- eine Auswerte- und Recheneinheit (23) am Ort der Spektroskopie-Einheit (27), wobei die Auswerte- und Recheneinheit (23) eingerichtet ist, Daten der spektroskopischen Bildgebung in einem Vektor zu verdichten und der örtlichen Position zuzuordnen.

8. Die Vorrichtung nach einem der vorhergehenden Ansprüche, **dadurch gekennzeichnet,**
**dass** die Zeilenkamera (22) eine SWIR-Zeilenkamera ist.

9. Die Vorrichtung nach einem der vorhergehenden Ansprüche, wobei die Spektroskopie-Einheit (27) eine KI - Engine aufweist, die eingerichtet ist, computergestützt die Inhomogenitäten zu ermitteln.

10. Die Vorrichtung nach Anspruch 9, wobei die KI - Engine mittels Deep-Learning-Methoden trainiert ist, aus den Spektren die Inhomogenitäten zu ermitteln.

11. Verfahren zur Ermittlung von Inhomogenitäten mittels hyperspektraler Bildgebung an Elektrodenbahnen (26, 1) bei der Elektrodenfertigung für Batteriezellen, **gekennzeichnet durch**:
- Aufnehmen von hyperspektralen Bildern an einem vorgegebenen Ort der Elektrodenfertigung von der sich vorwärts bewegenden Elektrodenbahn (26, 1),
- Ermittlung von Inhomogenitäten der Elektrodenbahn aus den Spektren der Bilder und
- Ermittlung und Sicherung der örtlichen Position der Inhomogenitäten in Längsrichtung der Elektrodenbahn (26, 1).

12. Das Verfahren nach Anspruch 11, **dadurch gekennzeichnet, dass** an der Position der Kontaktfläche zwischen einer Umlenkrolle (25), über die die Elektrodenbahn geführt wird, und der Elektrodenbahn die Zeilenkamera die Bilder aufnimmt.

13. Das Verfahren nach Anspruch 11 oder 12,
wobei das Sichern der örtlichen Position der Inhomogenität durch ein Markieren auf der Elektrodenbahn erfolgt.

14. Das Verfahren nach einem der Ansprüche 11 bis 13, **dadurch gekennzeichnet,**
**dass** die spektralen Charakteristika der Inhomogenität als Ortskodierung entlang der Elektrodenbahn derart gesichert werden, dass die Position der Inhomogenität anhand der spektralen Charakteristika auffindbar ist.

15. Das Verfahren nach einem der Ansprüche 11 bis 14, wobei mittels einer KI - Engine computergestützt die Inhomogenitäten ermittelt werden.
